# EUROPÄISCHE PATENTSCHRIFT

(11) **EP 4 495 435 B1**
(45) Veröffentlichungstag und Bekanntmachung des Hinweises auf die Patenterteilung: **18.02.2026**
(21) Anmeldenummer: 24189053.2
(22) Anmeldetag: 17.07.2024
(51) Int. Cl.: F16B 2/22, F16B 5/00, F16B 19/14, F16B 2/08

(54) **MONTAGEELEMENT SOWIE NUTZELEMENT MIT EINEM ANSCHLUSSSTÜCK UND EINEM DARAN ANGESCHLOSSENEN MONTAGEELEMENT**
MOUNTING ELEMENT AND UTILITY ELEMENT WITH A CONNECTING PIECE AND A MOUNTING ELEMENT CONNECTED THERETO
ÉLÉMENT DE MONTAGE ET ÉLÉMENT UTILITAIRE DOTÉ D'UNE PIÈCE DE RACCORDEMENT ET D'UN ÉLÉMENT DE MONTAGE RACCORDÉ À CELUI-CI

(30) Priorität: 20.07.2023 DE 202023104074 U
(43) Veröffentlichungstag der Anmeldung: 22.01.2025
(73) Patentinhaber: OBO Bettermann Hungary Kft., 2347 Bugyi (HU)
(72) Erfinder: KARDOS, Gyula, 2040 Budaörs (HU); MAGYARI, Valentin, 3390 Füzesabony (HU)
(74) Vertreter: Haverkamp Patentanwälte PartG mbB

(56) Entgegenhaltungen:
- DE-A1- 102012 001 195
- DE-A1- 102018 221 291
- ES-U- 1 074 939
- US-A1- 2017 019 057
- US-B2- 8 353 493

## Beschreibung

Gegenstand der Erfindung ist ein Montageelement zum Anschließen desselben an ein Nutzelement. Insbesondere betrifft die Erfindung ein Montageelement, vorgesehen zum Anschließen desselben an ein Anschlussstück eines Nutzelementes, welches Montageelement eine Sockelstruktur und zumindest zwei daran angeformte Verklammerungsarme mit jeweils einem das Anschlussstück des Nutzelementes hintergreifenden Hakenabschnitt umfasst. Gegenstand der Erfindung ist ferner ein Nutzelement, beispielsweise eine Komponente zum Festlegen oder Halten von Langgütern, etwa von Kabeln oder Rohren, mit einem Anschlussstück und einem daran befestigten Montageelement.

Es gibt eine Vielzahl von unterschiedlichen Anwendungen, bei denen ein Montageelement an ein Nutzelement angeschlossen wird. Bei solchen Nutzelementen kann es sich beispielsweise um Komponenten zum Festlegen bzw. Halten von Langgütern, wie beispielsweise Kabeln oder Rohren handeln. Derartige Bauteile, typischerweise aus Metall hergestellt, verfügen, wenn etwa als Kabelschelle ausgeführt, über einen flachen Befestigungsabschnitt mit einer oder mehreren Durchbrechungen zum Durchführen eines Befestigers zum Festlegen eines solchen Bauteils an einem Befestigungsgrund, beispielsweise einer Wand, einer Decke oder dergleichen. Um eine Befestigung derartiger Bauteile zu erleichtern, werden Setzgeräte verwendet, die typischerweise elektrisch betrieben und als Nagler konzipiert, Nägel in den Befestigungsgrund, beispielsweise Beton eintreiben. Da die mit einem solchen Gerät zu befestigenden Bauteile zwar über eine Befestigerdurchbrechung, nicht jedoch über Stützkonturen, auf denen ein solches Setzgerät abgestützt werden kann, verfügen, werden derartiger Bauteile zunächst mit Montageelementen ausgerüstet, die eine solche an ein Setzgerät angepasste Stützstruktur aufweisen, um das Bauteil mit einem Setzgerät an einem Befestigungsgrund festlegen zu können. Neben der Stützstruktur verfügt ein solches Montageelement über einen Durchgangskanal zur Führung des mit dem Setzgerät zu setzenden Befestigers. Neben der vorstehend beschriebenen beispielhaften Ausbildung eines solchen Montageelementes gibt es zahlreiche weitere Verwendungsfälle, in denen ein solches Montageelement an ein Nutzelement angeschlossen werden soll.

Ein als Kabelschelle ausgebildetes Montageelement mit den Merkmalen des Oberbegriffs des Anspruchs 1 ist aus ES 1 074 939 U bekannt. Bei diesem Montageelement tragen die Schenkel der Schelle endseitig einen jeweils in Richtung zu dem anderen Schenkel abragenden Hakenabschnitt. Unter Ausnutzung der Materialelastizität der Schenkel werden die Enden mit den Hakenabschnitten zum Anschließen dieses Montageelementes an ein Nutzelement durch Montageöffnungen desselben hindurchgesteckt, sodass die Hakenabschnitte das Nutzelement hintergreifen. Verspannt wird diese Bügelschelle mit dem Nutzgegenstand dann durch ein zwischen den Schenkeln hindurchgeführtes Kabel, auf das mittels einer Spannschraube ein verstellbares Druckstück wirkt. Eine Verbindung von zwei Teilen, wie in ES 1 074 939 U1 offenbart, ist auch aus anderen technischen Bereichen bekannt, beispielsweise bei einer Verbindung von Kabeln, wie in DE 10 2018 221 291 A1 beschrieben. Die in diesem Stand der Technik beschriebene Verbindungsvorrichtung verfügt über zwei Verbindungselemente, die durch eine Verrastung unter Zwischenschaltung von Kabeln miteinander verbunden werden können.

Ausgehend von diesem Stand der Technik liegt der Erfindung die Aufgabe zugrunde, ein Montageelement vorzuschlagen, welches an einem Nutzelement nicht nur in einfacher und insbesondere werkzeugloser Art und Weise befestigbar ist, sondern welches zudem auch sicher an dem Nutzelement gehalten ist, ohne dass ein zusätzliches Spannen, wie bei einer Bügelschelle gemäß ES 1 074 939 U beschrieben, erforderlich ist.

Gelöst wird diese Aufgabe durch ein Montageelement gemäß Anspruch 1, bei dem an zumindest einem der Verklammerungsarme wenigstens ein nach Anschluss an ein Anschlussstück gegenüber der zum Anschlussstück weisenden Montageseite der Sockelstruktur abragender Stellhebel angeformt oder an diesen angeschlossen ist, durch den auf diesen Verklammerungsarm bei einer von dem Anschlussstück des Nutzelementes weggerichteten Verstellung des Stellhebels bei an dem Nutzelement montierten Montageelement infolge seiner Abstützung auf der Montageseite des Anschlussstückes eine Stellkraft zum Halten und/oder Verstellen des Verklammerungsarmes in seiner bzw. seine das Anschlussstück mit seinem Hakenabschnitt hintergreifenden Stellung wirkt.

Dieses Montageelement verfügt über eine Sockelstruktur. Diese ist angepasst an die Auslegung des Teils des Nutzelementes, an den das Montageelement angeschlossen werden soll. Die Sockelstruktur kann daher nach Art einer Sockelplatte ausgeführt sein. An die Sockelstruktur sind zumindest zwei Verklammerungsarme angeformt. Jeder Verklammerungsarm trägt einen Hakenabschnitt, wobei die Hakenabschnitte gegensinnig zueinander ausgerichtet sind, damit diese das Nutzelement in seinem Abschnitt, an dem das Montageelement montiert ist, hintergreifen. Typischerweise verfügt das Nutzelement über ein insbesondere flach ausgelegtes Anschlussstück. Auf der einen Oberfläche eines solchen Anschlussstückes des Nutzelementes ist die Sockelstruktur mit ihrer Montageseite abgestützt. Die Hakenabschnitte der Verklammerungsarme hintergreifen das Anschlussstück und sind somit auf der gegenüberliegenden Seite desselben abgestützt. Somit ist der beispielsweise als Anschlussstück ausgelegte Anschlussbereich des Nutzelementes von den Verklammerungsarmen des Montageelementes zumindest bereichsweise eingefasst.

Von Besonderheit ist, dass zumindest einem Verklammerungsarm ein Stellhebel zugeordnet ist. Dieser ragt von der Montageseite der Sockelstruktur ab, und zwar in derselben Richtung wie die Verklammerungsarme. Der Stellarm und der Verklammerungsarm sind dergestalt zueinander angeordnet und eingerichtet, dass bei einer Verstellung des Stellhebels in Richtung zur Sockelstruktur eine Stellkraft auf den Verklammerungsarm wirkt, und zwar in Richtung der Ausstellung der Hakenabschnitte. Somit besteht zwischen dem Stellhebel und dem diesem zugeordneten Verklammerungsarm auch eine kinematische Kopplung. Die Kontaktfläche des Stellhebels, mit dem dieser bei einer Montage des Montageelementes an dem Nutzelement abgestützt ist, weist bei nicht montiertem Montageelement einen Abstand zu der Ebene der Stützfläche des Hakenabschnittes, wenn in dieselbe Ebene projiziert, auf, der kleiner ist als die Materialstärke des Anschlussstücks des Nutzelementes, an dem das Montageelement angeschlossen wird. Dieses gilt, wenn die Ebene der Stützflächen der Hakenabschnitte von der Montagefläche einen größeren Abstand bei unbelastetem Stellhebel haben als die Kontaktfläche des Stellhebels. Selbstverständlich ist es auch möglich, dass die Kontaktfläche des Stellhebels und die Ebene der Hakenabschnitte sich in derselben Ebene befinden oder auch dass die Kontaktfläche des Stellhebels einen größeren Abstand zur Montagefläche des Montageelementes aufweist als die Stützfläche des Hakenabschnittes. Damit ist das Montageelement nicht nur formschlüssig an das Nutzelement angeschlossen, sondern durch den auf den Verklammerungsarm im montierten Zustand wirkenden Stellhebel zudem in dieser den Formschluss gewährleistenden Stellung sicher gehalten. Eine Aufschwenkbewegung des Verklammerungsarmes, bei der sein Hakenabschnitt aus seiner das Anschlussstück des Nutzelementes hintergreifenden Stellung herausgebracht wird, ist durch den durch die Montage des Montageelementes aktivierten Stellhebel blockiert. Damit ist ein unbeabsichtigtes Lösen des Montageelementes durch eine darauf einwirkende, entgegen der ursprünglichen Montagerichtung gerichteten Zugkraft wirksam verhindert.

Vorteilhaft bei einer solchen Auslegung des Montageelementes ist zudem, dass dieses an Anschlussstücke unterschiedlicher Materialstärke angeschlossen werden kann. Kompensiert wird dieses durch eine entsprechend stärkere oder schwächere Verformung des Stellhebels im Zuge des Montagevorganges des Montageelementes.

Mitunter weisen Nutzelemente Randabkantungen auf, insbesondere auch solche, die zu dem Befestigungsgrund gerichtet sind. Dann befindet sich das Anschlussstück des Nutzelementes mit einem gewissen Abstand zu der Oberfläche des Befestigungsgrundes. Bei einer Auslegung des Montageelementes als Führung für einen mit einem Setzgerät zu setzenden Befestiger sorgen die das Anschlussstück des Nutzelementes hintergreifenden Hakenabschnitte zugleich dafür, dass das Anschlussstück durch den Setzvorgang, d.h.: das Setzen beispielsweise eines Nagels, nicht in Richtung zum Befestigungsgrund ausgebeult wird. Bei derartigen Nutzelementen handelt es sich um Nutzelemente mit einer Grundplatte, in die zum Setzen des Montageelementes zwei Durchbrechungen unter Belassung eines Materialstreifens als Anschlussstück zwischen diesen Durchbrechungen eingebracht sind. Bei derartigen Nutzelementen kann es sich beispielsweise um Sammelhalterungen für Kabel oder andere Langgüter handeln.

In einer bevorzugten Ausgestaltung sind der Verklammerungsarm und der Stellhebel an einen von der Sockelstruktur noch außen gerichteten Anbindungsfortsatz an typischerweise gegenüberliegenden Seiten des Anbindungsfortsatzes angeformt. Ein von dem Stellhebel auf den Anbindungsfortsatz ausgeübtes Stellmoment wirkt auf diesen nach Art eines Drehmomentes, wodurch diese durch den Stellhebel eingekoppelte Kraft auf den daran angeformten Verklammerungsarm wirkt, durch die der Verklammerungsarm in seine Verklammerungsstellung gedrückt und/oder unter Vorspannung gestellt wird. Bei einer solchen Ausgestaltung des Montageelementes ist es zweckmäßig, wenn der Anbindungsabschnitt des Anbindungsfortsatzes, an den der Stellhebel durch seine Anformung angreift, in Richtung der durch den Stellhebel einwirkenden Kraft etwas ausgestellt ist. Dann weist dieser Anbindungsabschnitt eine gewisse Stellvorgabe auf. Diese befindet sich mithin in der unbelasteten Stellung in einer Übertotpunktstellung, damit auch bei möglicherweise ungünstigen Montagebedingungen oder einer nicht sachgerechten Montage die von dem Stellhebel einwirkende Kraft nicht in die entgegengesetzte Richtung in den Anbindungsfortsatz eingekoppelt wird.

Grundsätzlich ist es ausreichend, wenn ein solches Montageelement nur mit einem seiner Verklammerungsarme mit dem Nutzelement verspannt wird. Dann bilden der oder die weiteren Verklammerungsarme zu diesem verspannbaren Verklammerungsarm ein Widerlager. Allerdings kann eine deutlich höhere Spannkraft aufgebracht werden, wenn alle Verklammerungsarme durch zumindest einen Stellhebel nach der Montage des Montageelementes auf dem Nutzelement unter Vorspannung gestellt sind. Bei gleichartiger Auslegung der Verklammerungsarme ist auf diese Weise für jeden Verklammerungsarm ein entsprechend belastbares Widerlager bereitgestellt.

Weiterhin bevorzugt ist eine Ausgestaltung des Montageelementes, bei dem dem zumindest einen oder auch allen Verklammerungsarmen beidseitig jeweils ein Stellhebel zugeordnet ist. Diese erlaubt eine Auslegung des Montageelementes, dass die zueinander weisenden Stellhebel zweier benachbarter Verklammerungsarme ineinander übergehen. Vorteilhaft ist hierbei zum einen, dass dann keine von der Montageseite der Sockelstruktur abstehenden freien Stellhebelenden vorhanden sind, an denen sich möglicherweise etwas verfangen könnte, sondern eine bügelartige Struktur bereitgestellt ist. Vorteilhaft bei einer solchen Ausgestaltung ist zum anderen, dass bei einer solchen Auslegung der Stellhebel aufgrund seiner beidseitigen Anbindung an einen Verklammerungsarm zu seiner Aktivierung translatorisch verstellt und nicht verschwenkt wird. Aus diesem Grunde bewirkt eine Verstellung des Stellhebels an seinen Enden eine entsprechende Aufstellbewegung des Anbindungsfortsatzes, was wiederum zur Verstellung bzw. Einbau einer Vorspannung des Verklammerungsarmes in der gewünschten Richtung führt.

Montiert werden kann ein solches Montageelement an bzw. auf dem Anschlussstück eines Nutzelementes durch Aufclipsen und somit durch eine translatorisch ausgeführte Aufdrückbewegung. Typischerweise sind um dieses zu ermöglichen, die von der Montageseite der Sockelstruktur wegweisenden Außenseiten der Hakenabschnitte in Richtung zu ihrem freien Ende hin in Richtung zur Montagefläche der Sockelstruktur geneigt. Damit dienen diese Außenseiten als Stellflächen, durch die die Verklammerungsarme bei einer Montage an einem Anschlussstück eines Nutzelementes voneinander gespreizt werden, bis die daran angeformten Hakenabschnitte das Anschlussstück hintergreifen können. Infolge der Materialelastizität springen diese dann in ihre das Anschlussstück hintergreifende Stellung selbsttätig zurück. Diese Stellung der Verklammerungsarme mit ihren das Anschlussstück hintergreifenden Hakenabschnitten ist infolge der durch die Montage darin eingebrachten Vorspannung gesichert.

Wenn das Montageelement als Setzhilfe zum Befestigen eines Nutzelementes mittels eines Setzgerätes an einem Befestigungsgrund dienen soll, ist an die Sockelstruktur an ihrer von der Montageseite wegweisenden Seite typischerweise eine Hülse angeformt. Diese dient als Führung für den zu setzenden Befestiger und zugleich als Abstützung für ein Setzgerät.

Ein solches Montageelement ist typischerweise ein aus einem geeigneten Kunststoff hergestelltes Element, typischerweise hergestellt im Wege eines Spritzgussverfahrens.

Nachfolgend ist die Erfindung anhand eines Ausführungsbeispiels unter Bezugnahme auf die beigefügten Figuren beschrieben. Es zeigen:
- **Fig. 1**:: eine perspektivische Darstellung eines erfindungsgemäßen Montageelementes,
- **Fig. 2:**: eine Seitenansicht des Montageelementes der Figur 1,
- **Fig. 3:**: eine perspektivische Ansicht auf das Montageelement aus einer Blickrichtung von unten und
- **Fig. 4:**: das Montageelement in einer Darstellung entsprechend Figur 3, angeschlossen an das Anschlussstück eines im Übrigen nicht näher dargestellten Nutzelementes.

Ein Montageelement 1 ist vorgesehen zum Anschließen an das Anschlussstück eines Nutzelementes, welches an einen Befestigungsgrund, beispielsweise einer Wand festgelegt werden soll. Bei dem Montageelement 1 handelt es sich um ein Kunststoffspritzgussteil. Das Montageelement 1 ist ausgelegt, damit das Nutzelement mittels eines Setzgerätes, beispielsweise eines Naglers an dem Befestigungsgrund festgelegt werden kann.

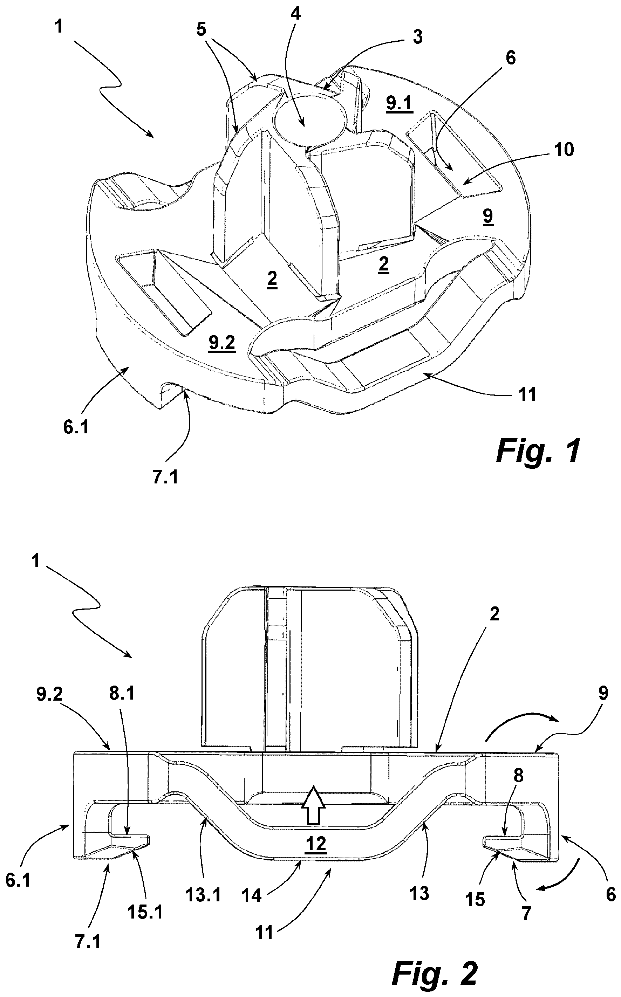

Das Montageelement 1 verfügt über eine Sockelstruktur 2, die bei dem dargestellten Ausführungsbeispiel nach Art einer Platte ausgeführt ist. Auf der in Figur 1 gezeigten Oberseite der Sockelstruktur ist eine Hülse 3 angeformt. Die Hülse 3 verfügt über einen Durchgangskanal 4, durch den ein Befestiger zum Festlegen des Montageelementes 1 und damit des Nutzelementes hindurchgeführt wird. An die Mantelfläche der Hülse 3 sind radiale Versteifungsrippen 5 angeformt. Die Querschnittsgeometrie der Hülse 3 mit ihren Versteifungsrippen 5 ist angepasst an die Geometrie eines darauf abzustützenden Setzwerkzeuges. Der Durchgangskanal 4 setzt sich fort in einen Durchbruch der Sockelstruktur 2.

An die Sockelstruktur 2 des beispielhaft dargestellten Montageelementes 1 sind zwei einander bezüglich des Zentrums der Sockelstruktur 2 gegenüberliegende Verklammerungsarme 6, 6.1 an der Unterseite der Sockelstruktur 2 angeformt. Die Erstreckung der Verklammerungsarme 6, 6.1 ist aus der Seitenansicht der Figur 2 erkennbar. Die Verklammerungsarme 6, 6.1 sind L-förmig ausgeführt. Die Hakenabschnitte 7, 7.1 der beiden Verklammerungsarme 6, 6.1 weisen zueinander und dienen zum Hintergreifen des Anschlussstückes eines Nutzelementes. Die zu der Unterseite der Sockelstruktur 2 weisende Stützfläche 8, 8.1 der Hakenabschnitte 7, 7.1 befindet sich in einem Abstand zur Sockelstruktur 2, dass in die durch die Verklammerungsarme 6, 6.1 geschaffene Aufnahme das Anschlussstück des Nutzelementes hinsichtlich seiner Materialstärke einpasst. Das Montageelement 1 kann an Anschlussstücke unterschiedlicher Materialstärke angeschlossen werden, solange diese in die durch die Verklammerungsarme 6, 6.1 geschaffenen Aufnahmen einpassen, mithin nicht dicker sind als diese. Die Materialstärke eines solchen Anschlussstückes kann daher auch deutlich geringer sein als dasjenige, was in die Aufnahmen der Verklammerungsarme 6, 6.1 von seiner Materialstärke her einpasst.

Im Folgenden ist der Verklammerungsarm 6 und sein Anschluss an die Sockelstruktur 2 näher beschrieben. Dieselben Ausführungen gelten gleichermaßen auch für den Verklammerungsarm 6.1 und sein Anschluss an die Sockelstruktur 2. Der Verklammerungsarm 6 ist an gegenüberliegenden Seiten - seinen Schmalseiten - an zwei Anbindungsfortsätze 9, 9.1 der Sockelstruktur 2 angeformt. Die Anbindungsfortsätze 9, 9.1 sind mit Abstand zueinander angeordnet. Gefüllt ist dieser Abstand mit dem Verklammerungsarm 6. Dieser ist in radialer Richtung und somit in Richtung zum Zentrum der Sockelstruktur 2 von dieser durch eine Aussparung 10 beabstandet. Damit ist der Verklammerungsarm 6 zwischen den beiden Anbindungsfortsätzen 9, 9.1 gehalten und aufgrund der Aussparung 10 in Richtung zum Zentrum der Sockelstruktur 2 und in der entgegengesetzten Richtung bedingt durch die Materialelastizität des zur Herstellung des Montageelementes 1 eingesetzten Kunststoffes elastisch verstellbar.

An jeden Anbindungsfortsatz 9, 9.1 der Sockelstruktur 2 ist ein Stellhebel 11 an seiner dem Verklammerungsarm 6 gegenüberliegenden Seite angeformt. Bei dem dargestellten Ausführungsbeispiel sind die Stellhebel 11 für die Verklammerungsarme 6, 6.1 als gemeinsame Stellhebel ausgeführt und sind somit ausgebildet, sowohl auf den Verklammerungsarm 6 als auch auf den gegenüberliegenden Verklammerungsarm 6.1 einzuwirken. Der in Figur 1 erkennbare Stellhebel 11 ist daher sowohl an den Anbindungsfortsatz 9 des Verklammerungsarmes 6 als auch an den Anbindungsabschnitt 9.2, an den der Verklammerungsarm 6.1 angeformt ist, angeschlossen. Der Stellhebel 11 ist bügelförmig ausgeführt. Die Bügelform erhält der Stellhebel 11, wie aus Figur 2 erkennbar, durch einen mittleren Stützabschnitt 12. An diesem ist in Richtung zu den beiden Anbindungsabschnitten 9, 9.2 jeweils ein S-förmig geformter Übergangsabschnitt angeformt. Die Materialstärke des Stellhebels 11 ist, wie ebenfalls aus Figur 2 erkennbar, geringer als diejenige der als Platte ausgeführten Sockelstruktur 2. Die zwischen dem Stützabschnitt 12 und der Anbindung des Stellhebels 11 an die Anbindungsabschnitte 9, 9.2 befindlichen Abschnitte dienen als Stellabschnitte 13, 13.1. Die Stellabschnitte 13, 13.1 sind an ihrem zu dem jeweiligen Anbindungsabschnitt 9, 9.2 weisenden Ende in die Ebene der Sockelstruktur 2 hinein gekrümmt.

Die Unterseite des Stützabschnittes 12 - seine Kontaktfläche 14 - kontaktiert bei einer Montage des Montageelementes 1 auf dem Anschlussstück eines Nutzelementes das Anschlussstück und wird in Richtung zur Ebene der Sockelstruktur 2 beim Aufdrücken des Montageelementes 1 auf das Anschlussstück bewegt, wie durch den Blockpfeil in Figur 2 angedeutet. Die Stellabschnitte 13, 13.1 können aufgrund ihrer Anformung an die Anbindungsfortsätze 9, 9.2 in dieser Richtung nicht ausweichen. Dieses resultiert in einer Verstellung der Anbindungsabschnitte 9, 9.2 in der in Figur 2 anhand des Verklammerungsarms 6 kenntlich gemachten Bewegung.

Bei dem dargestellten Ausführungsbeispiel befindet sich die Kontaktfläche 14 des Stützabschnittes 12 in etwa in einer Ebene mit dem in diese Richtung weisenden Abschluss der Hakenabschnitte 7, 7.1.

Die Hakenabschnitte 7, 7.1 weisen an ihrer von der Sockelstruktur 2 wegweisenden Seite jeweils eine in Richtung zum Zentrum der Sockelstruktur 2 geneigte Stellfläche 15, 15.1 auf. Jede Stellfläche 15. 15.1 erstreckt sich mit ihrer Neigung über die Breite der Hakenabschnitte 7, 7.1. Auf diese Weise kann das Montageelement durch eine Drückbewegung auf das Anschlussstück eines Nutzelementes aufgeclipst werden. Durch die Stellflächen 15, 15.1 werden die Verklammerungsarme 6, 6.1 zunächst gespreizt, bis diese mit ihrem Hakenabschnitt 7, 7.1 das Anschlussstück hintergreifen und aufgrund der Materialelastizität dann hinter das Anschlussstück greifen. Im Zuge dieser Drück-Montagebewegung werden die beiden Stellhebel 11 in der vorbeschriebenen Weise bewegt. Auch wenn dieses eine Gegenkraft für die uniaxiale Montagebewegung darstellt, gewährleistet dieses jedoch bei dem an das Anschlussstück eines Nutzelementes angeschlossenen Montageelement 1 seinen sicheren Halt daran.

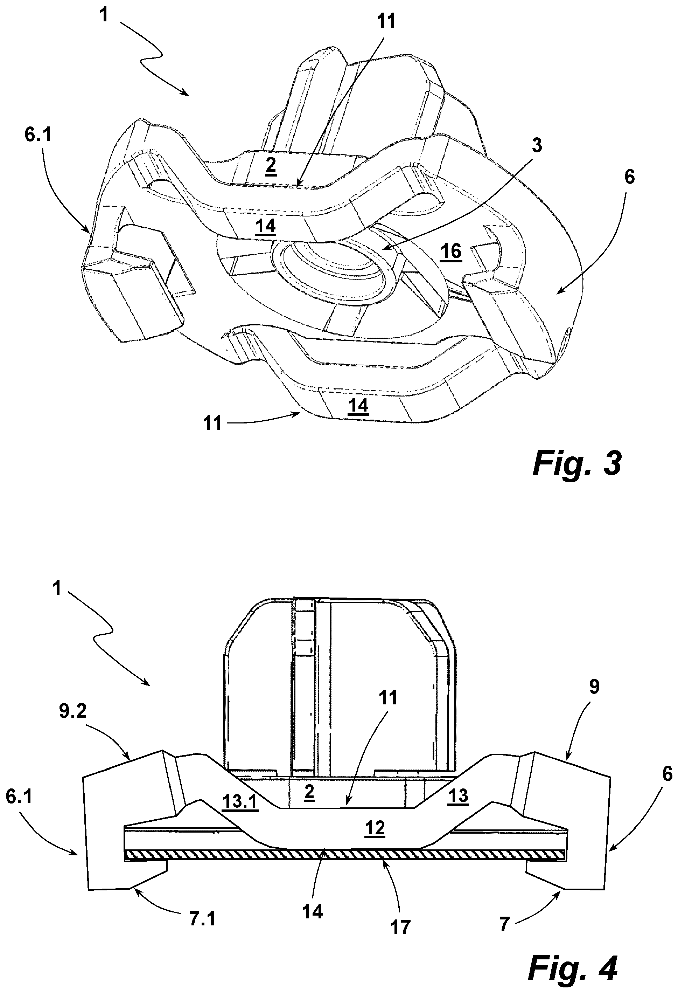

Die Auslegung der Unterseite des Montageelementes 1 mit seinen Verklammerungsarmen 6, 6.1 und den Stellhebeln 11 ist auch aus der perspektivischen Darstellung der Figur 3 gut erkennbar. Bei diesem Ausführungsbeispiel befindet sich im Zentrum der Sockelplatte 2 eine domförmige Ausnehmung, in die die Hülse 3 hineinragt. Die Unterseite 16 der Sockelstruktur 2 bildet sodann die die Stützflächen 8, 8.1 der Verklammerungsarme 6, 6.1 gegenüberliegende Stützfläche für das Anschlussstück, an dem das Montageelement 1 montiert wird.

Figur 4 zeigt das Montageelement 1, angeschlossen an das Anschlussstück 17 eines im Übrigen nicht näher dargestellten Nutzelementes, beispielsweise einer Kabelschelle. Erkennbar sind die Stellhebel 11 im Zuge der Montagebewegung verformt, wobei durch die Stellhebelbewegung nicht nur die Stellabschnitte 13, 13.1, sondern insbesondere die Anbindungsabschnitte 9, 9.2 sowie diejenigen, an die der andere Stellhebel 11 angeschlossen ist, aufgestellt und damit auf die Verklammerungsarme 6, 6.1 eine Vorspannkraft wirkt, nachdem diese aufeinander zu verschwenkt worden sind, bis diese an den Längsseiten des Anschlussstückes 17 zur Anlage gelangen. Infolge der durch die Stellhebel 11 in die Verklammerungsarme 6, 6.1 induzierte Schwenkbewegung kann das Montageelement 1 insbesondere auch an Anschlussstücke angeschlossen werden, deren Breite geringer ist als der Abstand der Verklammerungsarme 6, 6.1 zueinander, wobei ein solches Anschlussstück dennoch in Richtung seiner Breite einen spielfreien Sitz des Montageelementes gewährleistet. Herauszustellen ist bei dem dargestellten Ausführungsbeispiel, dass jeder Verklammerungsarm 6, 6.1 beidseitig an die Stellhebel 11 angeschlossen ist und somit die Stellkraft in diese beiden Seiten gleichermaßen eingekoppelt wird.

Die Erfindung ist anhand von Ausführungsbeispielen beschrieben worden. Ohne den Schutzbereich, beschrieben durch die geltenden Ansprüche, zu verlassen, ergeben sich für den Fachmann zahlreiche weitere Ausgestaltungen, den Erfindungsgedanken zu verwirklichen, ohne dass diese im Rahmen dieser Ausführungen näher erläutert werden müssten.

### Bezugszeichenliste

- 1: Montageelement
- 2: Sockelstruktur
- 3: Hülse
- 4: Durchgangskanal
- 5: Versteifungsrippen
- 6, 6.1: Verklammerungsarm
- 7, 7.1: Hakenabschnitt
- 8, 8.1: Stützfläche
- 9, 9.1, 9.2: Anbindungsfortsatz
- 10: Aussparung
- 11: Stellhebel
- 12: Stützabschnitt
- 13, 13.1: Stellabschnitt
- 14: Kontaktfläche
- 15, 15.1: Stellfläche
- 16: Unterseite
- 17: Anschlussstück

## Patentansprüche

1. Montageelement, vorgesehen zum Anschließen desselben an ein Anschlussstück (17) eines Nutzelementes, welches Montageelement (1) eine Sockelstruktur (2) und zumindest zwei daran angeformte Verklammerungsarme (6, 6.1) mit jeweils einem Hakenabschnitt (7, 7.1) umfasst, welcher dazu geeignet ist, das Anschlussstück (17) des Nutzelementes zu hintergreifen, **dadurch gekennzeichnet, dass** an zumindest einem der Verklammerungsarme (6, 6.1) wenigstens ein nach Anschluss an ein Anschlussstück (17) gegenüber der zum Anschlussstück (17) weisenden Montageseite der Sockelstruktur (2) abragender Stellhebel (11) angeformt oder an diesen angeschlossen ist, durch den auf diesen Verklammerungsarm (6, 6.1) bei einer von dem Anschlussstück (17) des Nutzelementes weggerichteten Verstellung des Stellhebels (11) bei an dem Nutzelement montierten Montageelement (1) infolge seiner Abstützung auf der Montageseite des Anschlussstückes (17) eine Stellkraft zum Halten und/oder Verstellen des Verklammerungsarmes (6, 6.1) in seiner bzw. seine das Anschlussstück (17) mit seinem Hakenabschnitt (7, 7.1) hintergreifenden Stellung wirkt.

2. Montageelement nach Anspruch 1, **dadurch gekennzeichnet, dass** zwischen dem Verklammerungsarm (6, 6.1) und dem Stellhebel (11) ein nach außen gerichteter Anbindungsfortsatz (9, 9.1, 9.2) als Teil der Sockelstruktur (2) angeordnet ist, an den an einander gegenüberliegenden Seiten der Verklammerungsarm (6, 6.1) und der Stellhebel (11) angeformt sind.

3. Montageelement nach Anspruch 2, **dadurch gekennzeichnet, dass** der Anbindungsabschnitt des Anbindungsfortsatzes (9, 9.1, 9.2), an den der Stellhebel (11) angeformt ist, bei unbelastetem Stellhebel in Richtung der durch den Stellhebel (11) darauf einwirkenden Kraft aus der Ebene der Sockelstruktur (2) ausgestellt ist.

4. Montageelement nach einem der Ansprüche 1 bis 3, **dadurch gekennzeichnet, dass** jedem Verklammerungsarm (6, 6.1) des Montageelementes (1) zumindest ein Stellhebel (11) zugeordnet ist.

5. Montageelement nach einem der Ansprüche 1 bis 3, **dadurch gekennzeichnet, dass** dem zumindest einen Verklammerungsarm (6, 6.1) beidseitig jeweils ein Stellhebel (11) zugeordnet ist.

6. Montageelement nach Anspruch 5, **dadurch gekennzeichnet, dass** die zueinander weisenden Stellhebel (11) zweier benachbarter Verklammerungsarme (6, 6.1) ineinander übergehen.

7. Montageelement nach einem der Ansprüche 1 bis 6, **dadurch gekennzeichnet, dass** die von der Unterseite (16) der Sockelstruktur (2) wegweisende Außenseite der Hakenabschnitte (7, 7.1) in Richtung zu ihrem freien Ende hin zur Sockelstruktur (2) geneigt ausgeführt sind.

8. Montageelement nach einem der Ansprüche 1 bis 7, **dadurch gekennzeichnet, dass** die Sockelstruktur im Bereich des Zentrums ihrer Montageseite eine Stützstruktur zur Abstützung auf dem Anschlussstück des Nutzelementes trägt.

9. Montageelement nach einem der Ansprüche 1 bis 8, **dadurch gekennzeichnet, dass** das Montageelement (1) eine von der Sockelstruktur (2) an ihrer von den Verklammerungsarmen (6, 6.1) wegweisenden Seite abragende Hülse (3) trägt und die Sockelstruktur (2) in Fortsetzung des Durchgangskanals (4) der Hülse (3) eine Durchbrechung aufweist.

10. Montageelement nach einem der Ansprüche 1 bis 9, **dadurch gekennzeichnet, dass** das Montageelement (1) über zwei einander bezüglich des Zentrums der Sockelstruktur (2) gegenüberliegende Verklammerungsarme (6, 6.1) verfügt.

11. Montageelement nach einem der Ansprüche 1 bis 10, **dadurch gekennzeichnet, dass** das Montageelement (1) ein Kunststoffmontageelement ist.

12. Nutzelement, etwa eine Komponente zum Festlegen oder Halten von Langgütern, wie Kabel oder Rohre, mit einem Anschlussstück (17) und einem daran angeschlossenen Montageelement (1), **dadurch gekennzeichnet, dass** das Montageelement (1) nach einem der Ansprüche 1 bis 11 ausgeführt ist und dieses mit den Hakenabschnitten (7, 7.1) seiner zumindest zwei Verankerungsarme (6, 6.1) das Anschlussstück (17) des Nutzelementes hintergreift und die Hakenabschnitte (7, 7.1) in ihrer das Anschlussstück (17) hintergreifenden Stellung durch den zumindest einen an dem Anschlussstück (17) des Nutzelementes abgestützten Stellhebel (11) unter Vorspannung gehalten sind.

## Claims

1. Mounting element, designed for connecting to a connecting piece (17) of a utility element, which mounting element (1) comprises a base structure (2) and at least two clamping arms (6, 6.1) integrally formed thereon, each with a hook section (7, 7.1) suitable for engaging behind the connecting piece (17) of the utility element, **characterized in that** at least one actuating lever (11) projecting relative to the mounting side of the base structure (2) facing the connecting piece (17) after connection to a connecting piece (17) is integrally formed on or connected to at least one of the clamping arms (6, 6.1), by which, when the actuating lever (11) is moved away from the connecting piece (17) of the utility element and the mounting element (1) is mounted on the utility element, an actuating force is exerted on this clamping arm (6, 6.1) due to its support on the mounting side of the connecting piece (17) for holding and/or adjusting the clamping arm (6, 6.1) in its position, in which it engages the connecting piece (17) with its hook section (7, 7.1) from behind.

2. Mounting element according to claim 1, **characterized in that** an outwardly directed connecting extension (9, 9.1, 9.2) is arranged between the clamping arm (6, 6.1) and the actuating lever (11) as part of the base structure (2), on which the clamping arm (6, 6.1) and the actuating lever (11) are integrally formed on opposite sides.

3. Mounting element according to claim 2, **characterized in that** the connecting section of the connecting extension (9, 9.1, 9.2), to which the actuating lever (11) is integrally formed, is projected out of the plane of the base structure (2) in the direction of the force acting on it by the actuating lever (11) when the actuating lever is unloaded.

4. Mounting element according to any one of claims 1 to 3, **characterized in that** at least one actuating lever (11) is assigned to each clamping arm (6, 6.1) of the mounting element (1).

5. Mounting element according to any one of claims 1 to 3, **characterized in that** a respective actuating lever (11) is assigned on both sides to the at least one clamping arm (6, 6.1).

6. Mounting element according to claim 5, **characterized in that** the mutually facing actuating levers (11) of two adjacent clamping arms (6, 6.1) merge into one another.

7. Mounting element according to any one of claims 1 to 6, **characterized in that** the outer side of the hook sections (7, 7.1) pointing away from the underside (16) of the base structure (2) is inclined towards its free end towards the base structure (2).

8. Mounting element according to any one of claims 1 to 7, **characterized in that** the base structure in the region of the center of its mounting side carries a support structure for support on the connecting piece of the utility element.

9. Mounting element according to one of claims 1 to 8, **characterized in that** the mounting element (1) carries a sleeve (3) projecting from the base structure (2) on its side pointing away from the clamping arms (6, 6.1) and the base structure (2) has an opening in continuation of the through channel (4) of the sleeve (3).

10. Mounting element according to any one of claims 1 to 9, **characterized in that** the mounting element (1) has two clamping arms (6, 6.1) opposite each other with respect to the center of the base structure (2).

11. Mounting element according to one of claims 1 to 10, **characterized in that** the mounting element (1) is a plastic mounting element.

12. Utility element, such as a component for securing or holding long goods, such as cables or pipes, with a connecting piece (17) and a mounting element (1) connected thereto, **characterized in that** the mounting element (1) is designed according to any one of claims 1 to 11 and that it engages the connecting piece (17) of the utility element with the hook sections (7, 7.1) of its at least two anchoring arms (6, 6.1) from behind and the hook sections (7, 7.1) are held under preload in their position engaging the connecting piece (17) by the at least one actuating lever (11) supported on the connecting piece (17) of the utility element.

## Revendications

1. Élément de montage, conçu pour se raccorder à une pièce de raccordement (17) d'un élément utilitaire, lequel élément de montage (1) comprend une structure de base (2) et au moins deux bras de serrage (6, 6.1) formés de manière intégrale sur celle-ci, chacun avec une section de crochet (7, 7.1) étant conçue pour mettre en prise la pièce de raccordement (17) de l'élément utilitaire, **caractérisé en ce qu'**au moins un levier d'actionnement (11) est formé sur ou relié à au moins l'un des bras de serrage (6, 6.1) et fait saillie vers le côté de montage de la structure de base (2) faisant face à la pièce de raccordement (17) après raccordement de l'élément de montage (1) à une pièce de raccordement (17), levier d'actionnement par lequel, lorsque le levier d'actionnement (11) est éloigné de la pièce de raccordement (17) de l'élément utilitaire, une force agit sur ce bras de serrage (6, 6.1) pour maintenir et/ou ajuster le bras de serrage (6, 6.1) dans sa position, ou dans sa position mettant en prise la pièce de raccordement (17) avec sa section de crochet (7, 7.1), en raison de son support sur le côté de montage de la pièce de raccordement (17).

2. Élément de montage selon la revendication 1, **caractérisé en ce qu'**une extension de connexion (9, 9.1, 9.2) dirigée vers l'extérieur, comme partie de la structure de base (2), est disposée entre le bras de serrage (6, 6.1) et le levier d'actionnement (11), sur laquelle le bras de serrage (6, 6.1) et le levier d'actionnement (11) sont formés intégralement sur les côtés opposés.

3. Élément de montage selon la revendication 2, **caractérisé en ce que** la section de connexion de l'extension de connexion (9, 9.1, 9.2), à laquelle le levier d'actionnement (11) est formé intégralement, est projetée hors du plan de la structure de base (2) dans la direction de la force agissant sur elle par le levier d'actionnement (11) lorsque le levier d'actionnement est déchargé.

4. Élément de montage selon l'une des revendications 1 à 3, **caractérisé en ce qu'**au moins un levier d'actionnement (11) est affecté à chaque bras de serrage (6, 6.1) de l'élément de montage (1).

5. Élément de montage selon l'une des revendications 1 à 3, **caractérisé en ce qu'**un levier d'actionnement (11) est respectivement affecté à l'au moins un bras de serrage (6, 6.1) des deux côtés.

6. Élément de montage selon la revendication 5, **caractérisé en ce que** les leviers d'actionnement (11) de deux bras de serrage adjacents (6, 6.1) se faisant face fusionnent l'un dans l'autre.

7. Élément de montage selon l'une des revendications 1 à 6, **caractérisé en ce que** le côté extérieur des sections de crochet (7, 7.1) pointant à l'opposé de la face inférieure (16) de la structure de base (2) est incliné en direction de leur extrémité libre vers la structure de base (2).

8. Élément de montage selon l'une des revendications 1 à 7, **caractérisé en ce que** la structure de base dans la zone du centre de son côté de montage porte une structure de support pour le support sur la pièce de raccordement de l'élément utilitaire.

9. Élément de montage selon l'une des revendications 1 à 8, **caractérisé en ce que** l'élément de montage (1) porte un manchon (3) faisant saillie de la structure de base (2) sur son côté pointant à l'opposé des bras de serrage (6, 6.1) et que la structure de base (2) présente une perforation dans la continuité du canal traversant (4) du manchon (3).

10. Élément de montage selon l'une des revendications 1 à 9, **caractérisé en ce que** l'élément de montage (1) dispose de deux bras de serrage (6, 6.1) opposés l'un à l'autre par rapport au centre de la structure de base (2).

11. Élément de montage selon l'une des revendications 1 à 10, **caractérisé en ce que** l'élément de montage (1) est un élément de montage en plastique.

12. Élément utilitaire, tel qu'un composant pour fixer ou maintenir des marchandises longues, telles que des câbles ou des tuyaux, avec une pièce de raccordement (17) et un élément de montage (1) relié à celle-ci, **caractérisé en ce que** l'élément de montage (1) est conçu selon l'une des revendications 1 à 11 et qu'il met en prise la pièce de raccordement (17) de l'élément utilitaire avec les sections de crochet (7, 7.1) de ses au moins deux bras de serrage (6, 6.1) et que les sections de crochet (7, 7.1) sont maintenues sous pré-charge dans leur position mettant en prise la pièce de raccordement (17) par l'au moins un levier d'actionnement (11) supporté par la pièce de raccordement (17) de l'élément utilitaire.
